# EUROPEAN PATENT APPLICATION

(11) **EP 4 481 717 A1**
(43) Date of publication of application: **25.12.2024**
(21) Application number: 23781196.3
(22) Date of filing: 10.03.2023
(51) Int. Cl.: G09F 9/30, F16H 19/04, F16H 57/038, G01K 1/02, G06F 1/16, H04M 1/02

(54) **ROLLABLE ELECTRONIC DEVICE COMPRISING GEAR STRUCTURE**

(30) Priority: 28.03.2022 KR 20220038011; 19.07.2022 KR 20220089181
(71) Applicant: Samsung Electronics Co., Ltd., Gyeonggi-do, 16677 (KR)
(72) Inventor: JEONG, Hoyoung, Suwon-si Gyeonggi-do 16677 (KR); KANG, Hyunggwang, Suwon-si Gyeonggi-do 16677 (KR); YOON, Yeonggyu, Suwon-si Gyeonggi-do 16677 (KR); KIM, Moonsun, Suwon-si Gyeonggi-do 16677 (KR); KIM, Junhyuk, Suwon-si Gyeonggi-do 16677 (KR); CHO, Hyoungtak, Suwon-si Gyeonggi-do 16677 (KR); HONG, Hyunju, Suwon-si Gyeonggi-do 16677 (KR)
(74) Representative: Gulde & Partner
(86) International application number: PCT/KR2023/003304
(87) International publication number: WO 2023/191339

(57) **Abstract**

An electronic device is provided. The electronic device comprises: a first housing; a second housing configured to slide with respect to the first housing; a flexible display configured to be spread or rolled on the basis of sliding of the second housing; a multi-bar structure supporting at least a part of the flexible display; a driving motor configured to generate a driving force for moving the second housing with respect to the first housing, and connected to the first housing; and a gear connecting structure for transmitting the driving force to the second housing. The gear structure comprises: a first gear connected to the driving motor; a second gear configured to be engaged with the first gear; a third gear connected to the second gear and configured to rotate together with the second gear; and a rack disposed on the inner surface of the second housing and configured to be engaged with the third gear. The first gear, the second gear, and the third gear are disposed within the first housing. The rack is disposed on the second housing.

## Description

### [Technical Field]

Various embodiments of the disclosure relate to a rollable electronic device including a gear structure.

### [Background Art]

With the development of information and communication technology and semiconductor technology, various functions are packed in one portable electronic device. For example, an electronic device may implement not only communication functions but also entertainment functions, such as playing games, multimedia functions, such as playing music and videos, communication and security functions for mobile banking, and scheduling and e-wallet functions. These electronic devices have been downsized to be conveniently carried by users.

As mobile communication services extend up to multimedia service sectors, electronic devices require a larger display to allow users satisfactory use of multimedia services as well as voice call or text messaging services. This, however, trades off the trend of electronic devices being compact.

### [Detailed Description of the Invention]

### [Technical Problem]

An electronic device (e.g., a portable terminal) may include a display having a flat surface or having a flat surface and a curved surface. An electronic device including a display may have a limitation in realizing a screen larger than the size of the electronic device due to the fixed display structure. Accordingly, research has been conducted on electronic devices including a rollable display.

The rolling or slide of the electronic device may be performed by sliding the housing using the driving force generated by a motor of the electronic device. Further, the rolling or unrolling of the rollable display may be performed by sliding the housing. However, due to the motor and the gear structure for transferring the driving force of the motor, the inner space of the electronic device may be reduced. According to an embodiment, as the inner space of the electronic device is reduced, the size of the battery may be reduced, and thus the usage time of the electronic device may be reduced.

As the number of gears used to transfer the driving force generated by the driving motor to the housing increases, the efficiency of the gear may decrease. Further, in a low temperature environment, the repulsive force of the display is increased, so that a relatively large force may be required for the sliding operation of the electronic device. Therefore, when the number of used gears increases, the thrust of the driving motor needs to be changed in a low temperature environment.

According to various embodiments of the disclosure, there may be provided an electronic device including a gear structure capable of optimizing the inner space of the electronic device and increasing a space in which components of the electronic device are to be disposed.

According to various embodiments of the disclosure, there may be provided an electronic device for changing the rotational speed of a driving motor based on the temperature.

The disclosure is not limited to the foregoing embodiments but various modifications or changes may rather be made thereto without departing from the spirit and scope of the disclosure.

### [Technical Solution]

According to an embodiment of the disclosure, an electronic device may comprise a first housing, a second housing configured to slide with respect to the first housing, a flexible display configured to be unfolded or rolled based on a sliding movement of the second housing, a multi-bar structure supporting at least a portion of the flexible display, a driving motor configured to generate a driving force for sliding the second housing and disposed in the first housing, and a gear connection structure for transferring the driving force to the second housing. The gear structure may include a first gear connected to the driving motor, a second gear configured to be engaged with the first gear, a third gear connected to the second gear and configured to rotate together with the second gear, and a rack disposed on an inner surface of the second housing and configured to be engaged with the third gear. The first gear, the second gear, and the third gear may be disposed in the first housing. The rack may be disposed on the second housing.

According to an embodiment of the disclosure, an electronic device may comprise a housing including a first housing and a second housing at least partially surrounded by the first housing and configured to move relative to the first housing, a display assembly at least partially disposed on the second housing and configured to be rolled based on a movement of the housing, a driving motor disposed in the housing and configured to generate a driving force, a gear structure configured to move the second housing relative to the first housing using the driving force, a temperature sensor disposed in the housing, and a processor configured to change a rotational speed of the driving motor based on a temperature detected by the temperature sensor. The gear structure may include a first bevel gear connected to the driving motor, a second bevel gear configured to be engaged with the first bevel gear, a spur gear connected to the second bevel gear and configured to rotate together with the second bevel gear, and a rack disposed on an inner surface of the second housing and configured to be engaged with the spur gear.

According to various embodiments of the disclosure, an operation method of an electronic device may comprise obtaining a user input, rotating a driving motor based on the obtained user input, detecting a temperature of the electronic device, determining whether the detected temperature is less than or equal to a designated temperature, and reducing a rotational speed of the driving motor when the detected temperature is less than or equal to the designated temperature.

### [Advantageous Effects]

According to various embodiments of the disclosure, an electronic device may include a rack gear disposed on an inner surface of a housing and a bevel gear for transferring a driving force generated by a driving motor to the rack gear. Since the rack gear is disposed on the inner surface of the housing, the inner space of the electronic device may be increased.

According to various embodiments of the disclosure, the electronic device may include a temperature sensor and a processor capable of adjusting the rotational speed of the driving motor based on the temperature. As the rotational speed or thrust of the driving motor is changed based on the temperature, the malfunction of the electronic device in the low temperature environment may be reduced.

Other various effects may be provided directly or indirectly in the disclosure.

### [Brief Description of Drawings]

FIG. 1 is a block diagram illustrating an electronic device in a network environment according to various embodiments of the disclosure;
FIG. 2 is a view illustrating a state in which a second display area of a display is received in a housing according to various embodiments of the disclosure.
FIG. 3 is a view illustrating a state in which a second display area of a display is exposed to the outside of a housing according to various embodiments of the disclosure;
FIG. 4 is an exploded perspective view illustrating an electronic device according to various embodiments of the disclosure;
FIG. 5 is a cross-sectional view taken along line A-A' of FIG. 2 according to various embodiments of the disclosure;
FIG. 6 is a cross-sectional view taken along line B-B' of FIG. 3 according to various embodiments of the disclosure;
FIG. 7 is a cross-sectional view taken along line C-C' of FIG. 3 according to various embodiments of the disclosure;
FIG. 8 is a perspective view illustrating a gear structure according to various embodiments of the disclosure;
FIG. 9 is a top view illustrating a gear structure according to various embodiments of the disclosure;
FIG. 10 is a plan view illustrating a gear structure according to various embodiments of the disclosure;
FIG. 11 is a cross-sectional view taken along line D-D' of FIG. 9 according to various embodiments of the disclosure;
FIG. 12 is a cross-sectional view taken along line E-E' of FIG. 10 according to various embodiments of the disclosure;
FIG. 13 is a block diagram illustrating an electronic device according to various embodiments of the disclosure; and
FIG. 14 is a flowchart illustrating operations of an electronic device, according to various embodiments of the disclosure.

### [Mode for Carrying out the Invention]

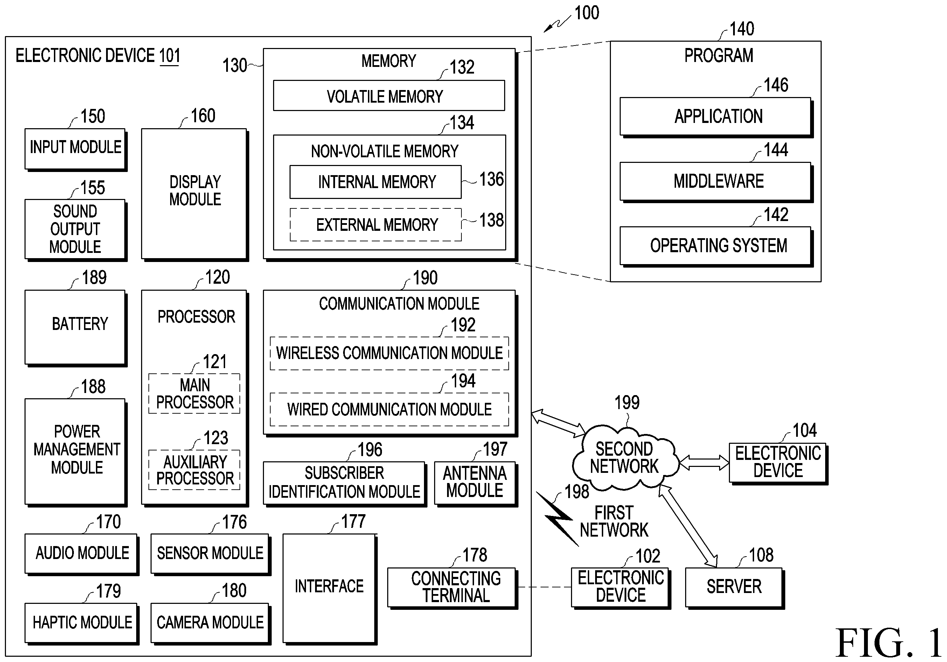

FIG. 1 is a block diagram illustrating an electronic device in a network environment according to various embodiments of the disclosure;

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

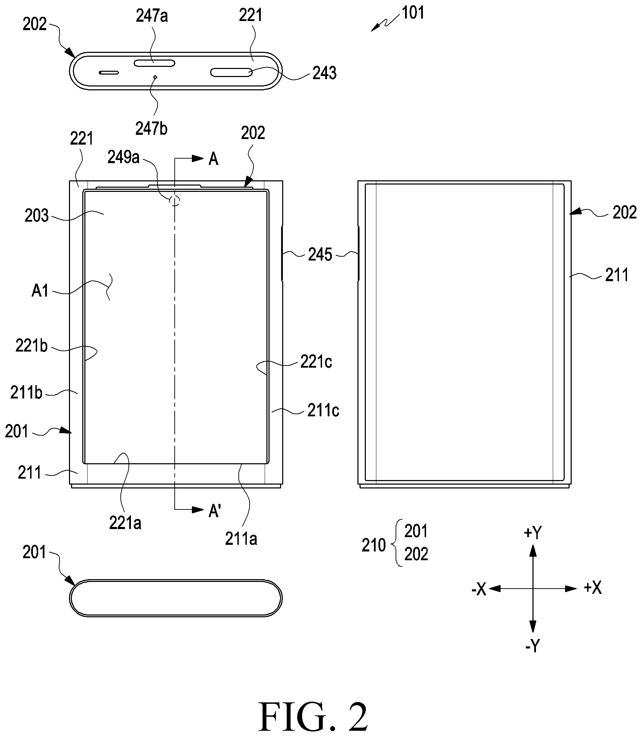

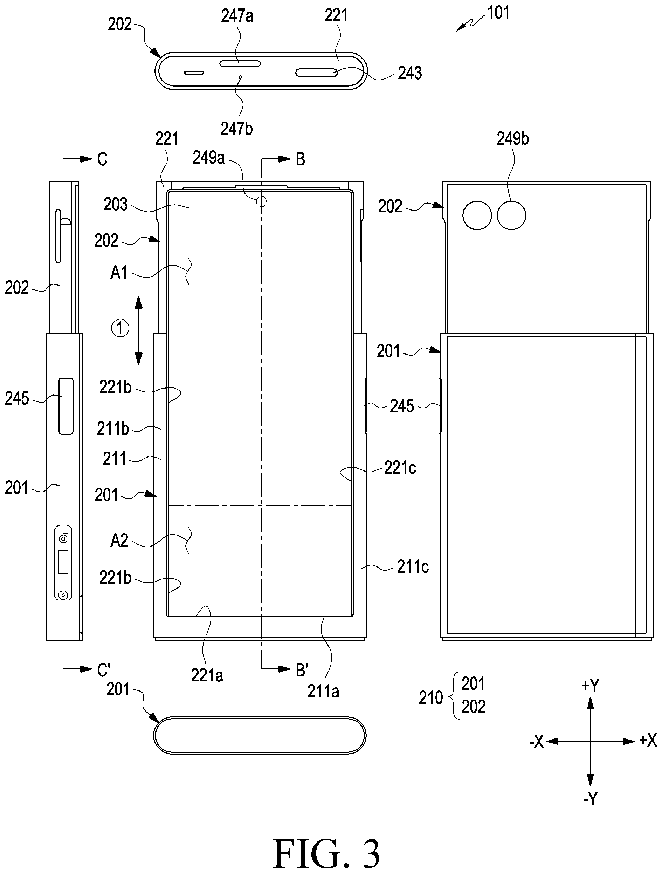

FIG. 2 is a view illustrating a state in which a second display area of a display is received in a housing according to various embodiments of the disclosure. FIG. 3 is a view illustrating a state in which a second display area of a display is exposed to the outside of a housing according to various embodiments of the disclosure;

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a closed state, a slide-in state or a first state of the electronic device 101 or the housing 210. For example, the first state may be defined as a closed state of the second housing 202 with respect to the first housing 201.

The state illustrated in FIG. 3 may be referred to as an open state, a slide-out state or a second state of the electronic device 101 or the housing 210. For example, the second state may be defined as an open state of the second housing 202 with respect to the first housing 201. According to an embodiment, the "closed state" or "opened state" may be defined as a closed or opened state of the electronic device.

Referring to FIGS. 2 and 3, the electronic device 101 may include a housing 210. The housing 210 may include a first housing 202 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in a predetermined direction with respect to the first housing 201, for example, a direction indicated by an arrow ①.

According to various embodiments, the second housing 202 may be referred to as a second structure, a slide portion or a slide housing, and may be movable relative to the first housing 201. According to an embodiment, the second housing 202 may receive various electrical/electronic components, such as a circuit board or a battery.

According to an embodiment, the first housing 202 may have, disposed therein, a motor, a speaker, a sim socket, and/or a sub circuit board electrically connected with a main circuit board. The second housing 201 may receive a main circuit board on which electric components, such as an application processor (AP) and a communication processor (CP) are mounted.

According to various embodiments, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

According to various embodiments, the 1-1th sidewall 211a, 1-2th sidewall 211b, and 1-3th sidewall 211c of the first cover member 211 may be formed to have a side opening (e.g., in the front surface) to receive at least a portion of the second housing 202. For example, at least a portion of the second housing 202 may be surrounded by the first housing 201 and be slid in the direction parallel to the first surface F1 or second surface F2, e.g., arrow ① direction, while being guided by the first housing 201. According to a specific embodiment, the 1-1th sidewall 211a, the 1-2th sidewall 211b, and/or the 1-3th sidewall 211c of the first cover member 211 may be integrally formed. According to a specific embodiment, the 1-1th sidewall 211a, the 1-2th sidewall 211b, and/or the 1-3th sidewall 211c of the first cover member 211 may be formed as separate structures and be combined or assembled.

According to various embodiments, the first cover member 211 may cover at least a portion of the display 203. For example, at least a portion of the display 203 may be received in the second housing 202. The second cover member 221 and/or the 2-1th sidewall 221a may cover a portion of the flexible display 203 received in the second housing 202.

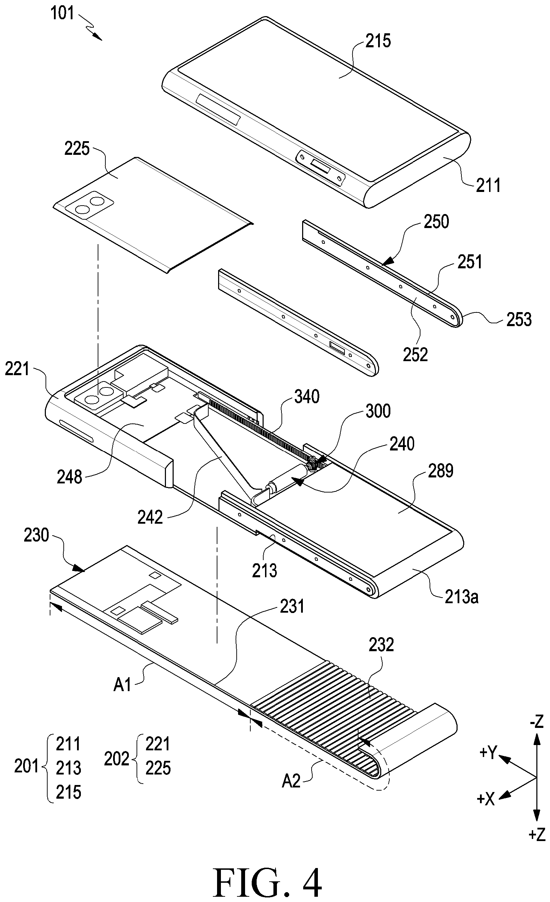

According to various embodiments, the second housing 202 may include a second cover member 221 (e.g., a slide plate). The second cover member 221 may include a first surface (e.g., the first surface F1 of FIG. 4) forming at least a portion of the second cover member 221. According to an embodiment, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, the second housing 202 may move in an open state or closed state with respect to the first housing 201 in a first direction (e.g., direction ①) parallel to the 1-2th sidewall 211b or the 1-2th sidewall 211c. In the closed state, the second housing 202 may be positioned at a first distance from the 1-1th sidewall 211a and, in the opened state, the second housing 202 may be moved to be positioned at a second distance larger than the first distance from the 1-1th sidewall 211a. In an embodiment, in the closed state, the first housing 201 may surround a portion of the 2-1th side wall 221a.

According to various embodiments, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to various embodiments, the display 203 may include a first display area A1 and a second display area A2 configured to be exposed to the outside of the electronic device 101 based on the slide of the housing 210. According to an embodiment, the second display area A2 may be received into the inside of the housing 210 (e.g., a slide-in motion) or be visually exposed to the outside of the electronic device 101 (e.g., a slide-out motion) as the first housing 201 moves (e.g., slides) with respect to the second housing 202. According to an embodiment, the first display area A1 may be disposed on the second housing 202. For example, the first display area A1 may be disposed on the second cover member 221. According to an embodiment, the second display area A2 may extend from the first display area A1, and the second display area A2 may be inserted or received in, or visually exposed to the outside of, the first housing 201 as the second housing 202 slides.

According to various embodiments, the second display area A2 may be moved while being substantially guided by one area (e.g., the curved surface 213a of FIG. 4) of the first housing 201 to be received in the space positioned in the housing 210 or exposed to the outside of the electronic device 101. According to an embodiment, the second display area A2 may move based on a slide of the second housing 202 in the first direction (e.g., the direction indicated by the arrow ①). For example, while the second housing 202 slides, a portion of the second display area A2 may be deformed into a curved shape in a position corresponding to the curved surface 213a of the first housing 201.

According to various embodiments, when viewed from above the second cover member 221 (e.g., front cover), if the second housing 202 moves from the closed state to the open state, the second display area A2 may be gradually exposed to the outside of the first housing 201 to be substantially coplanar with the first display area A1. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the closed state or the open state, the exposed portion of the second display area A2 may be positioned on a portion (e.g., the curved surface 213a of FIG. 4) of the first housing, and a portion of the second display area A2 may remain in the curved shape at the position corresponding to the curved surface 213a.

According to various embodiments, the key input device 245 may be positioned in one area of the first housing 201. Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201.

According to various embodiments, the connector hole 243 may be omitted or may receive a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to various embodiments, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker).

According to various embodiments, the camera modules 249a and 249b may include a first camera module 249a (e.g., front camera) and/or a second camera module 249b (e.g., rear camera). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202.

According to various embodiments, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

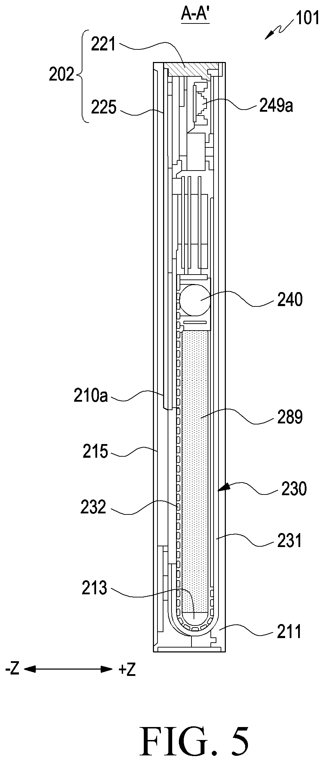

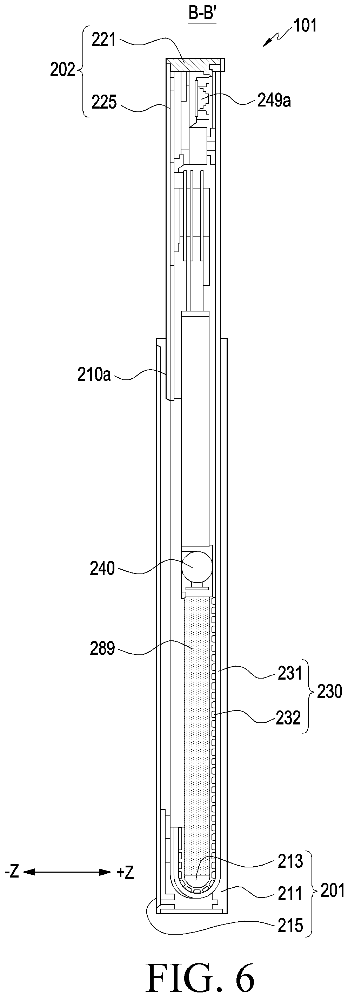

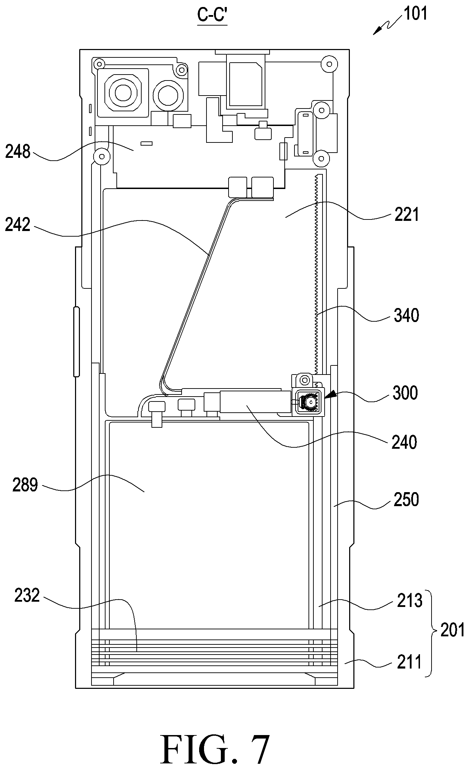

FIG. 4 is an exploded perspective view illustrating an electronic device according to various embodiments of the disclosure. FIG. 5A is a cross-sectional view taken along line A-A' of FIG. 2 according to various embodiments of the disclosure. FIG. 6 is a cross-sectional view taken along line B-B' of FIG. 3 according to various embodiments of the disclosure. FIG. 7 is a cross-sectional view taken along line C-C' of FIG. 3 according to various embodiments of the disclosure.

Referring to FIGS. 4, 5, 6, and/or 7, an electronic device 101 may include a first housing 201, a second housing 202, a display assembly 230, and a driving motor 240. The configuration of the first housing 201, the second housing 202, and the display assembly 230 of FIGS. 4, 5, 6, and/or 7 may be identical in whole or part to the configuration of the first housing 201, the second housing 202, and the display 203 of FIGS. 2 and/or 3.

According to various embodiments, the first housing 201 may include a first cover member 211 (e.g., the first cover member 211 of FIGS. 2 and 3), a frame 213, and a first rear plate 215.

According to various embodiments, the first cover member 211 may receive at least a portion of the frame 213 and a component (e.g., battery 289) positioned in the frame 213. According to an embodiment, the first cover member 211 may surround at least a portion of the second housing 202.

According to various embodiments, the frame 213 may be connected to the first cover member 211. For example, the frame 213 may be connected to the first cover member 211. The second housing 202 is movable relative to the first cover member 211 and/or the frame 213. According to an embodiment, the frame 213 may receive the battery 289. According to an embodiment, the frame 213 may include a curved portion 213a facing the display assembly 230.

According to various embodiments, the first rear plate 215 may substantially form at least a portion of the exterior of the first housing 201 or the electronic device 101. For example, the first rear plate 215 may be connected or coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic. According to an embodiment, the first rear plate 215 may be integrally formed with the first cover member 211.

According to various embodiments, the second housing 202 may include a second cover member 221 (e.g., the second cover member 221 of FIGS. 2 and 3) and a second rear plate 225.

According to an embodiment, the second cover member 221 may be connected to the first housing 201 through the guide rail 250 and, while being guided by the guide rail 250, reciprocate linearly in one direction (e.g., the Y-axis direction of FIGS. 2 and 3).

According to various embodiments, the second cover member 221 may support at least a portion of the display 203. For example, the first display area A1 of the display 203 may be substantially positioned on the second cover member 221 and remain in a flat plate shape. According to an embodiment, the second cover member 221 may be formed of a metal material and/or a non-metal (e.g., polymer) material. According to an embodiment, the circuit board 248 receiving the electronic component (e.g., the processor 120 and/or the memory 130 of FIG. 1) may be connected to the second cover member 221.

According to various embodiments, the second rear plate 225 may protect a component (e.g., the circuit board 248) positioned on the second cover member 221. For example, the second rear plate 225 may be connected to the second cover member 221 and may cover at least a portion of the circuit board 248.

According to various embodiments, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 215 may be formed of at least one of metal, glass, synthetic resin, or ceramic.

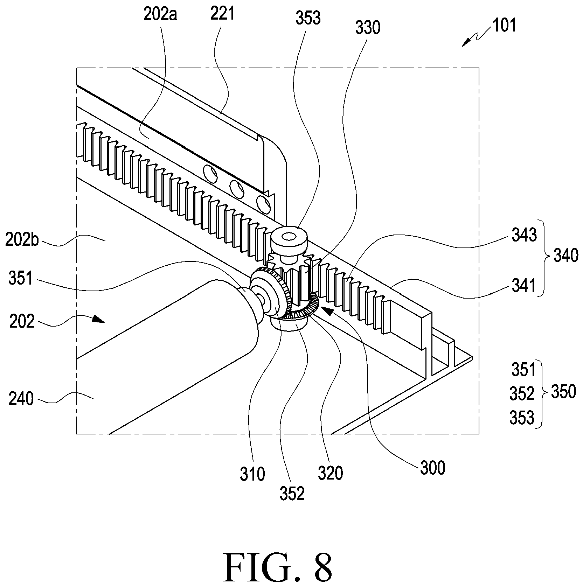

According to various embodiments, the second housing 202 may slide relative to the first housing 201 along the facing area 210a between the first housing 201 and the second housing 202. According to an embodiment, the facing area 210a may be referred to as a surface on which the first rear plate 215 and the second rear plate 225 contact or face each other. For example, the facing area 210a may be an inner surface of the first rear plate 215 or an outer surface of the second rear plate 225. According to an embodiment, the driving motor 240 and at least a portion (e.g., the first bevel gear 310, the second bevel gear 320, and the spur gear 330 of FIG. 8) of the gear structure 300 may be positioned between the display 231 and the facing area 210a. According to an embodiment, at least a portion (e.g., the first cover member 211 and the frame 213) of the first housing 201 and the second housing 202 may be positioned above (e.g., in the +Z direction) the facing area 210a. According to an embodiment, the driving motor 240 may be disposed on the inner surface 202b substantially perpendicular to the inner surface 202a of the second housing 202. The gear structure 300 of the disclosure may be referred to as a gear connection structure.

According to various embodiments, the display assembly 230 may include a display 231 (e.g., the display 203 of FIG. 2 and/or FIG. 3) and a multi-bar structure 232 supporting the display 231. According to an embodiment, the display 231 may be referred to as a flexible display, a foldable display, and/or a rollable display. According to an embodiment, at least a portion of the display assembly 230 (e.g., the second display area A2) may be rolled or unrolled based on the sliding movement of the first housing 201 and the second housing 202.

According to various embodiments, the multi-bar structure 232 may be connected to or attached to at least a portion (e.g., the second display area A2) of the display 231. According to an embodiment, as the second housing 202 slides, the multi-bar structure 232 may move with respect to the first housing 201. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure.

According to various embodiments, the driving motor 240 may move the second housing 202 relative to the first housing 201. For example, the driving motor 240 may generate a driving force for sliding the housings 201 and 202. At least a portion of the driving force generated by the driving motor 240 may be used to change the distance between the first housing 201 and the second housing 202 using a gear structure (e.g., the gear structure 300 of FIG. 7). According to an embodiment, the electronic device 101 may include a flexible printed circuit board 242 for electrically connecting the driving motor 240 and the circuit board 248. For example, the driving motor 240 may be electrically connected to the processor 120 mounted on the circuit board 248 through the flexible printed circuit board 242. One end portion of the flexible printed circuit board 242 may be connected to the driving motor 240, and the other end portion thereof may be connected to the circuit board 248. According to an embodiment, the flexible printed circuit board 242 may be disposed on the second cover member 221 of the second housing 202. According to an embodiment, the driving motor 240 may be disposed on the first housing 201 (e.g., the frame 213).

According to various embodiments, the electronic device 101 may include a gear structure 300 for transferring the driving force generated by the driving motor 240. For example, at least a portion of the driving force generated by the driving motor 240 connected to the second housing 202 may be transferred to the first housing 201 through the gear structure 300. According to an embodiment, the gear structure 300 may include at least one gear (e.g., the first bevel gear 310, the second bevel gear 320, and/or the spur gear 330 of FIG. 8) configured to rotate based on rotation of the driving motor 240 and a rack 340 configured to be engaged with the at least one gear.

According to various embodiments, the housing in which the rack 340 is positioned and the housing in which the driving motor 240 is positioned may be different. According to an embodiment, the driving motor 240 may be connected to the second housing 202, and the rack 340 may be connected to the first housing 201. According to another embodiment, the driving motor 240 may be connected to the first housing 201, and the rack 340 may be connected to the second housing 202.

According to various embodiments, the first housing 201 may receive a circuit board 248 (e.g., a main board). According to an embodiment, the processor, the memory, and/or the interface may be mounted on the circuit board 248. The processor may include one or more of, e.g., a central processing unit, an application processor, a graphic processing device, an image signal processing, a sensor hub processor, or a communication processor. According to various embodiments, the circuit board 248 may include a flexible printed circuit board type radio frequency cable (FRC). The circuit board 248 may be disposed on at least a portion of the second cover member 221 and may be electrically connected to the antenna module and the communication module.

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to various embodiments, the electronic device 101 may include a second circuit board (not shown) (e.g., a sub circuit board) spaced apart from the circuit board 248 (e.g., a main circuit board) in the first housing 201. The second circuit board may be electrically connected to the circuit board 248 through a connection flexible board. The second circuit board may be electrically connected with electric components disposed in an end area of the electronic device 101, such as the battery 289 or a speaker and/or a sim socket, and may transfer signals and power. According to an embodiment, the second circuit board may receive a wireless charging antenna (e.g., coil). For example, the battery 289 may receive power from an external electronic device through the wireless charging antenna. As another example, the battery 289 may transfer power to the external electronic device by the wireless charging antenna.

According to various embodiments, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to an embodiment, the battery 289 may be positioned in a frame 213, and the battery 289 may be slid along with the frame 213.

According to various embodiments, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250.

Referring to FIG. 5, in the electronic device 101 in the contracted or closed state (e.g., the first state), the second housing 202 may be disposed to be received in the first housing 201. As the second housing 202 is disposed to be received in the first housing 201, the volume of the electronic device 101 may decrease. As the second housing 202 is disposed to be received in the first housing 201, the size of the visually exposed area of the display 231 may change.

According to an embodiment, if the second housing 202 is fully received in the first housing 201, the size of the display 231 visually exposed may be minimized. For example, in the first state (e.g., FIG. 5A) in which the first housing 202 is fully received in the first housing 201, the first display area A1 of the display 231 may be visually exposed, and the second display area A2 may not be visually exposed. According to an embodiment, in the first state, at least a portion of the second display area A2 may be disposed between the battery 289 and the rear plates 215 and 225.

Referring to FIGS. 6 and 7, according to an embodiment, in the electronic device 101 in the open or extended state (e.g., the second state), the second housing 202 may protrude from the first housing 201. As the second housing 202 protrudes from the first housing 201, the volume of the electronic device 101 may increase. As the second housing 202 protrudes from the first housing 201, the size of the visually exposed area of the display 231 may be changed. For example, in the electronic device 101 in the second state, at least a portion of the second display area A2 of the display 231 may be visually exposed to the outside of the electronic device 101 together with the first display area A1.

According to various embodiments, the guide rail 250 may provide pressure to the multi-bar structure 233 based on the driving of the driving motor 240.

According to an embodiment, when the electronic device 101 slides out, the inner portion 252 of the guide rail 250 may provide pressure to the multi-bar structure 232. The multi-bar structure 232 receiving pressure moves along the slit 251 of the guide rail 250, and the electronic device 101 may be changed to the unfolded state (e.g., FIG. 3). When the electronic device 101 is unrolled, at least a portion of the display assembly 230 received between the first cover member 211 and the frame 213 of FIG. 4 may be extended to the front surface.

According to an embodiment, when the electronic device 101 slides in, an outer portion 253 of the guide rail 250 may provide pressure to the bent multi-bar structure 232. The multi-bar structure 232 receiving the pressure may move along the slit 251 of the guide rail 250, and the electronic device 101 may be changed to the closed state (e.g., FIG. 2). When the electronic device 101 is rolled, at least a portion of the display assembly 230 of FIG. 4 may be received between the first cover member 211 and the frame 213.

According to various embodiments, the driving motor 240 and at least a portion (e.g., the first bevel gear 310, the second bevel gear 320, and the spur gear 330 of FIG. 8) of the gear structure 300 may slide together with the first housing 201. According to an embodiment, the driving motor 240 may slide between the display 231 and the facing area 210a while being connected to the first housing 201.

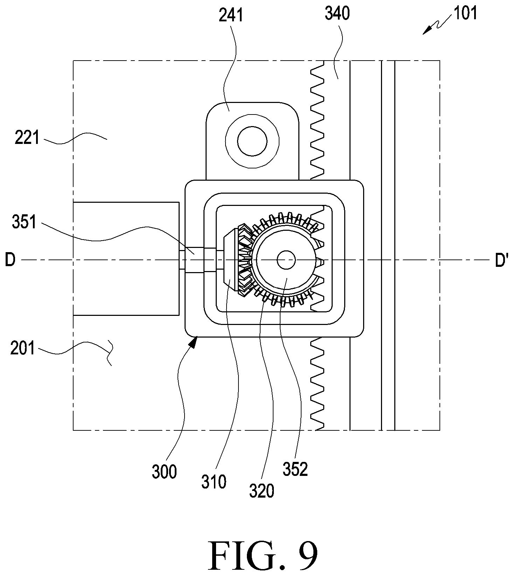

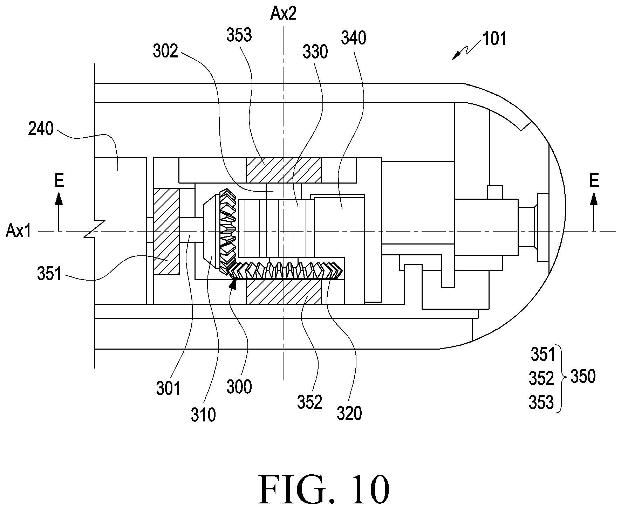

FIG. 8 is a perspective view illustrating a gear structure according to various embodiments of the disclosure. FIG. 9 is a top view illustrating a gear structure according to various embodiments of the disclosure. FIG. 10 is a plan view illustrating a gear structure according to various embodiments of the disclosure.

Referring to FIGS. 8, 9, and/or 10, the electronic device 101 may include a second housing 202 (e.g., the second cover member 221), a driving motor 240, a gear structure 300, and a friction reducing structure 350. The configuration of the second housing 202 (e.g., the second cover member 221), the driving motor 240, and the gear structure 300 of FIGS. 8, 9 and/or 10 may be identical in whole or part to the configuration of the second housing 202 (e.g., the second cover member 221), the driving motor 240, and the gear structure 300 of FIGS. 4 to 7.

According to various embodiments, the gear structure 300 may include a first bevel gear 310. According to an embodiment, the first bevel gear 310 may be connected to the driving motor 240. For example, the driving motor 240 may be connected to a shaft (e.g., the first shaft 301 of FIG. 10) connected to the driving motor 240. When the driving motor 240 operates, the first shaft 301 and the first bevel gear 310 connected to the first shaft 301 may rotate based on the rotation of the driving motor 240. According to an embodiment, the first bevel gear 310 may rotate about a first rotation axis (e.g., the first rotation axis Ax1 of FIG. 10) provided by the first shaft 301. According to an embodiment, the first bevel gear 310 may be connected to the first housing 201 using the driving motor 240. According to an embodiment, the first bevel gear 310 may be referred to as a first gear.

According to various embodiments, the gear structure 300 may include a second bevel gear 320 configured to be engaged with the first bevel gear 310. For example, the second bevel gear 320 may contact the first bevel gear 310 and may rotate based on the rotation of the first bevel gear 310. According to an embodiment, the second bevel gear 320 may change the transfer direction of the driving force generated by the driving motor 240. For example, the second bevel gear 320 may be positioned substantially perpendicular to the first bevel gear 310. The second bevel gear 320 may be connected to the second shaft 302 disposed substantially perpendicular to the first shaft 301. According to an embodiment, the second bevel gear 320 may rotate about a second rotation axis (e.g., the second rotation axis Ax2 of FIG. 10) provided by the second shaft 302. According to an embodiment, the second bevel gear 320 may be referred to as a second gear.

According to various embodiments, the gear structure 300 may include a spur gear 330 for transferring the rotational force of the bevel gears 310 and 320 to the rack 340. According to an embodiment, the spur gear 330 may rotate together with the second bevel gear 320. For example, the spur gear 330 may be connected to the second shaft 302. The spur gear 330 may rotate about the same axis (e.g., the second rotation axis Ax2) as the second bevel gear 320. According to an embodiment, the spur gear 330 may be engaged with the rack 340.

According to various embodiments, the gear structure 300 may include a rack 340 configured to be engaged with the spur gear 330. According to an embodiment, the rack 340 may be engaged with the spur gear 330. For example, based on the rotation of the spur gear 330, the rack 340 may move relative to at least a portion (e.g., the first bevel gear 310, the second bevel gear 320, and the spur gear 330) of the gear structure 300 and the driving motor 240. According to an embodiment, the spur gear 330 may be referred to as a pinion gear or a third gear.

According to various embodiments, the rack 340 may be connected to the second housing 202. For example, the rack 340 may be disposed on the second cover member 221 of the second housing 202. The housing (e.g., the second housing 202) to which the rack 340 is connected may be different from the housing (e.g., the first housing 201) to which other components (e.g., the first bevel gear 310, the second bevel gear 320, and the spur gear 330) of the gear structure 300 are connected.

According to various embodiments, the rack 340 may be disposed along the side surface of the second housing 202. According to an embodiment, the rack 340 may include a support area 341 disposed on the inner surface 202a of the second housing 202 and a gear tooth 343 extending from the support area 341 and configured to be engaged with the spur gear 330.

According to various embodiments, the electronic device 101 may move the second housing 202 with respect to the first housing (e.g., the first housing 201 of FIG. 2) using the driving motor 240 and the gear structure 300. For example, the gear structure 300 may transfer at least a portion of the driving force generated by the driving motor 240 connected to the first housing 201 to the second housing 202. According to an embodiment, when the driving motor 240 rotates, the first bevel gear 310 may rotate together with the first shaft 301 connected to the driving motor 240. The second bevel gear 320 may rotate by receiving at least a portion of the driving force generated by the driving motor 240 from the first bevel gear 310. The second shaft 302 and/or the spur gear 330 may rotate together with the second bevel gear 320 based on the rotation of the second bevel gear 320. When the spur gear 330 rotates, the rack 340 may receive at least a portion of the driving force generated by the driving motor 240 through the spur gear 330. For example, when the driving motor 240 rotates, the rack 340 may move relative to the gear assembly (e.g., the first bevel gear 310, the second bevel gear 320, and the spur gear 330).

According to various embodiments, the electronic device 101 may include a bracket 241 that connects at least a portion of the gear structure 300 to the second housing 202. For example, the bracket 241 may connect the gear structure 300 and/or the driving motor 240 to the second cover member 221 of the second housing 202. According to an embodiment, the bracket 241 may receive at least a portion of the gear structure 300. For example, the bracket 241 may surround at least a portion of the first bevel gear 310, the second bevel gear 320, and the spur gear 330. According to an embodiment, the first bevel gear 310, the second bevel gear 320, and the spur gear 330 may be connected to the driving motor 240 and the second cover member 221 using the bracket 241.

According to various embodiments, the friction reducing structure 350 may reduce the frictional force generated due to the movement of the gear structure 300. For example, the friction reducing structure 350 may include a bearing.

According to various embodiments, the friction reducing structure 350 may include a first bearing 351 for reducing the frictional force generated due to rotation of the first bevel gear 310. For example, the first bearing 351 may surround at least a portion of the first shaft 301 providing the first rotation axis Ax1. The first bearing 351 may be positioned between the first bevel gear 310 and the bracket 241. When the first shaft 301 connected to the first bevel gear 310 rotates, the first bearing 351 may reduce the frictional force generated between the first shaft 301 and the bracket 241.

According to various embodiments, the friction reducing structure 350 may include a second bearing 352 for reducing the frictional force generated due to rotation of the second bevel gear 320. For example, the second bearing 352 may surround at least a portion of the second shaft 302 providing the second rotation axis Ax2. The second bearing 352 may be positioned between the second bevel gear 320 and the bracket 241. When the second shaft 302 connected to the second bevel gear 320 rotates, the second bearing 352 may reduce the frictional force generated between the second shaft 302 and the bracket 241.

According to various embodiments, the friction reducing structure 350 may include a third bearing 353 for reducing the frictional force generated due to rotation of the spur gear 330. For example, the third bearing 353 may surround at least a portion of the second shaft 302 providing the second rotation axis Ax2. The third bearing 353 may be positioned between the spur gear 330 and the bracket 241. When the second shaft 302 connected to the spur gear 330 rotates, the third bearing 353 may reduce the frictional force generated between the second shaft 302 and the bracket 241.

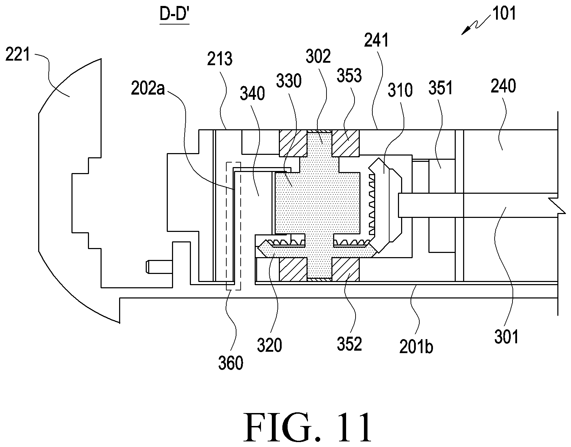

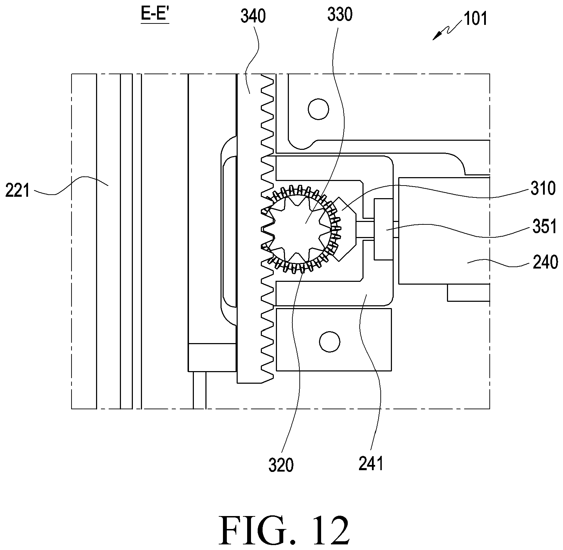

FIG. 11 is a cross-sectional view taken along line D-D' of FIG. 9 according to various embodiments of the disclosure. FIG. 12 is a cross-sectional view taken along line E-E' of FIG. 10 according to various embodiments of the disclosure.

Referring to FIGS. 11 and 12, an electronic device 101 may include a second cover member 221, a driving motor 240, a gear structure 300, a friction reducing structure 350 (e.g., a first bearing 351, a second bearing 352, and a third bearing 353), and a buffering member 360. The configuration of the second cover member 221, the driving motor 240, the gear structure 300, and the friction reducing structure of FIGS. 11 and 12 may be identical in whole or part to the configuration of the second cover member 221, the driving motor 240, the gear structure 300, the friction reducing structure 350, and the buffering member 360 of FIGS. 8 to 10.

According to various embodiments, the buffering member 360 may reduce the frictional force generated due to the sliding operation of the electronic device 101. According to an embodiment, the buffering member 360 may be positioned between the rack 340 and the bracket 241, and may reduce the frictional force generated between the rack 340 and the bracket 241. For example, the buffering member 360 may be disposed on the inner surface 202a of the second housing (e.g., the second cover member 221). According to an embodiment, the buffering member 360 may be positioned between the rack 340 and the first housing (e.g., the frame 213) and may reduce the frictional force generated between the rack 340 and the frame 213.

According to an embodiment, the buffering member 360 may include a low friction material. For example, the buffering member 360 may be a tape including polytetrafluoroethylene (PTFE) (e.g., Teflon).

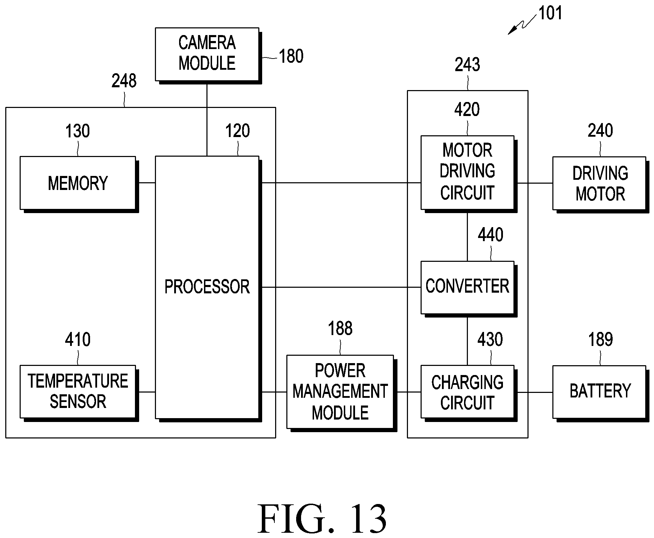

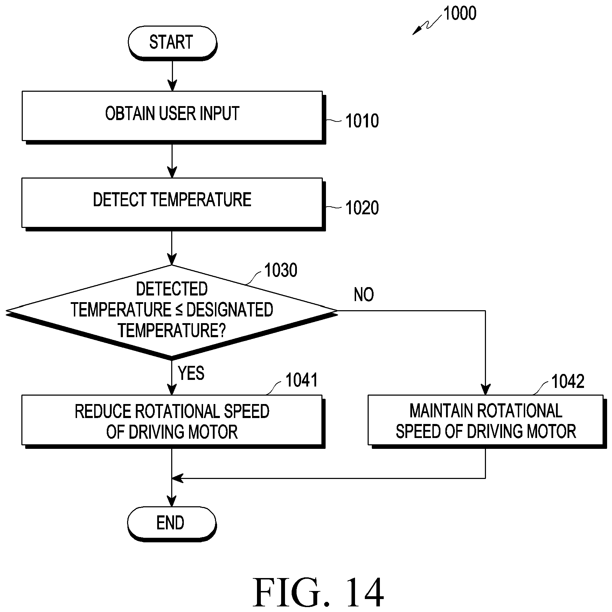

FIG. 13 is a block diagram illustrating an electronic device according to various embodiments of the disclosure. FIG. 14 is a flowchart illustrating operations of an electronic device, according to various embodiments of the disclosure.

Referring to FIG. 13, an electronic device 101 may include a processor 120, memory 130, a camera module 180, a power management module 188, a battery 189, a driving motor 240, a temperature sensor 410, a motor driving circuit 420, a charging circuit 430, and a converter 440. According to an embodiment, the processor 120, the memory 130, and the temperature sensor 410 may be mounted on the circuit board 248. According to an embodiment, the motor driving circuit 420, the charging circuit 430, and the converter 440 may be mounted on a flexible printed circuit board 242. Referring to FIG. 14, an operation method 1000 of an electronic device may include an operation 1010 of obtaining a user input, an operation 1020 of detecting a temperature, an operation 1030 of determining whether the detected temperature is less than or equal to a designated temperature, an operation 1041 of reducing a rotational speed of a driving motor when the detected temperature is less than or equal to the designated temperature, and an operation 1042 of maintaining the rotational speed of the driving motor when the detected temperature exceeds the designated temperature. The configuration of the processor 120, the memory 130, the camera module 180, the power management module 188, and the battery 189 of FIG. 13 may be identical in whole or part to the configuration of the processor 120, the memory 130, the camera module 180, the power management module 188, and the battery 189 of FIG. 1, and the configuration of the driving motor 240, the circuit board 248, and the flexible printed circuit board 242 of FIG. 13 may be identical in whole or part to the configuration of the driving motor 240, the circuit board 248, and the flexible printed circuit board 242 of FIG. 4.

According to various embodiments, the operation 1010 of obtaining the user input may mean an operation of detecting a user input transferred to the electronic device 101. For example, the electronic device 101 may obtain a user input for opening (e.g., slide-out) and/or closing (e.g., slide-in) the electronic device 101 using a user input (e.g., a pressure, a designated gesture, and/or user face recognition) using a key input device (e.g., the key input device 245 of FIG. 2) and/or a camera module (e.g., the camera module 249a of FIG. 2). According to an embodiment, when the operation 1010 of obtaining the user input is detected, the processor 120 and/or the motor driving circuit 420 of the electronic device 101 may operate the driving motor 240. According to an embodiment, the operation 1010 of obtaining the user input may be referred to as an operation of detecting a state change trigger of the electronic device 101.

According to various embodiments, the operation 1020 of detecting the temperature may mean an operation of detecting the internal and/or external temperature of the electronic device 101 using the temperature sensor 410. For example, the temperature sensor 410 may detect the internal and/or external temperature of the electronic device 101.

According to various embodiments, the temperature sensor 410 may detect the temperature of the electronic device 101 and/or the temperature outside the electronic device 101. According to an embodiment, the temperature sensor 410 may include a thermistor. According to an embodiment, the temperature sensor 410 may be disposed in a housing (e.g., the housing 210 of FIG. 2).

According to various embodiments, the processor 120 and/or the motor driving circuit 420 may perform the operation 1030 of determining whether the detected temperature is less than or equal to a designated temperature. According to an embodiment, in a low temperature environment (e.g., minus 10 degrees Celsius or less), the repulsive force of the display (e.g., the display 231 of FIG. 3) may be increased, and the driving force for the sliding operation of the electronic device 101 may be increased. The processor 120 may determine whether a component (e.g., the display 203 of FIG. 2) of the electronic device 101 is present in a low temperature environment using the temperature sensor 410.

According to various embodiments, the processor 120 and/or the motor driving circuit 420 may perform the operation 1041 of reducing the rotational speed of the driving motor or the operation 1042 of maintaining the rotational speed of the driving motor, based on the temperature detected by the temperature sensor 410. According to an embodiment, since the gear structure (e.g., the gear structure 300 of FIG. 8) includes a bevel gear (e.g., the first bevel gear 310 and/or the second bevel gear 320), the number of gear structures 300 may be added, and thus the thrust generated by the driving motor 240 may be reduced. The processor 120 and/or the motor driving circuit 420 may correct the reduction of the thrust due to the bevel gears 310 and 320 by adjusting the rotational speed (or thrust) of the driving motor 240 based on the detected temperature.

According to various embodiments, the processor 120 may change the rotational speed of the driving motor 240 based on the temperature detected by the temperature sensor 410. According to an embodiment, the processor 120 and/or the motor driving circuit 420 may prevent the malfunction of the electronic device 101 by reducing the rotational speed of the driving motor 240 in a low temperature environment. According to an embodiment, the motor driving circuit 420 may be referred to as a part of the processor 120. According to an embodiment, when the temperature detected by the temperature sensor 410 is within a first designated temperature range, the processor 120 and/or the motor driving circuit 420 may transfer a first signal for rotating the driving motor 240 at a first rotational speed to the driving motor 240. The processor 120 and/or the motor driving circuit 420 may transfer, to the driving motor 240, a second signal for rotating the driving motor 240 at a second rotational speed slower than the first rotational speed in a second designated temperature range lower than the first designated temperature range. For example, as the rotational speed decreases, the thrust of the driving motor 240 may increase, and a second thrust of the driving motor 240 in the second designated temperature range may be larger than a first thrust of the driving motor 240 in the first designated temperature range.

According to various embodiments, the memory 130 may store information about the rotational speed of the driving motor 240 corresponding to the temperature of the electronic device 101. For example, the memory 130 may store rotational speed information about the driving motor 240 corresponding to the temperature detected by the temperature sensor 410, and the processor 120 may change the rotational speed of the driving motor 240 based on the rotational speed information stored in the memory 130.

According to various embodiments, the power management module 188 may transfer power of the battery 189 to a component (e.g., the power management module 188, the processor 120, the driving motor 240, the motor driving circuit 420, or the converter 440) of the electronic device 101. According to an embodiment, the charging circuit 430 may be used to charge the battery 189. For example, the charging circuit 430 may adjust the current transferred to the battery 189. According to an embodiment, the converter 440 may change a voltage. For example, the converter 440 may include a boost converter for boosting.

According to various embodiments of the disclosure, an electronic device (e.g., the electronic device 101 of FIG. 3) may comprise a housing (e.g., the housing 210 of FIG. 3) including a first housing (e.g., the first housing 201 of FIG. 3), a second housing (e.g., the second housing 202 of FIG. 3) at least partially surrounded by the first housing and configured to slide relative to the first housing, a flexible display (e.g., the display 203 of FIG. 3) configured to be unfolded or rolled based on a sliding movement of the second housing, a multi-bar structure (e.g., the multi-bar structure 232 of FIG. 4) supporting at least a portion of the flexible display, a driving motor (e.g., the driving motor 240 of FIG. 4) configured to generate a driving force for sliding the second housing with respect to the first housing and connected to the first housing, and a gear connection structure (e.g., the gear structure 300 of FIG. 7) for transferring the driving force to the second housing. The gear connection structure may include a first gear (e.g., the first bevel gear 320 of FIG. 8) connected to the driving motor, a second gear (e.g., the second bevel gear 320 of FIG. 8) configured to be engaged with the first gear, a third gear (e.g.,. the spur gear 330 of FIG. 8) connected to the second gear and configured to rotate together with the second gear, and a rack (e.g., the rack 340 of FIG. 8) disposed on an inner surface (e.g., the inner surface 202a of FIG. 8) of the second housing and configured to be engaged with the spur gear. The first gear, the second gear, and the third gear may be connected to the first housing. The rack may be disposed on the second housing.

According to various embodiments, the electronic device may further comprise a temperature sensor (e.g., the temperature sensor 410 of FIG. 13) disposed in the housing and a processor (e.g., the processor 120 of FIG. 13) configured to change a rotational speed of the driving motor based on a temperature detected by the temperature sensor.

According to various embodiments, the processor may be configured to transfer, to the driving motor, a first signal for rotating the driving motor at a first rotational speed in a first designated temperature range and transfer, to the driving motor, a second signal for rotating the driving motor at a second rotational speed slower than the first rotational speed in a second designated temperature range lower than the first designated temperature range.

According to various embodiments, the electronic device may further comprise memory (e.g., the memory 130 of FIG. 13) configured to store rotational speed information about the driving motor corresponding to the temperature detected by the temperature sensor. The processor may be configured to change the rotational speed of the driving motor based on the rotational speed information stored in the memory.

According to various embodiments, the first gear may be configured to rotate about a first rotation axis (e.g., the first rotation axis Ax1 of FIG. 10), and the second gear and the third gear may be configured to rotate about a second rotation axis (e.g., the second rotation axis Ax2 of FIG. 10) substantially perpendicular to the first rotation axis.

According to various embodiments, the electronic device may further comprise a bracket (e.g., the bracket 241 of FIG. 9) connecting at least a portion of the gear connection structure to the second housing and surrounding at least a portion of the first gear, the second gear, and the third gear.

According to various embodiments, the gear connection structure may include a first shaft (e.g., the first shaft 301 of FIG. 10) connected to the first gear and a second shaft (e.g., the second shaft 302 of FIG. 10) connected to the second gear and the third gear, and the first shaft and the second shaft may be at least partially surrounded by the bracket.

According to various embodiments, the electronic device may further comprise a friction reducing structure (e.g., the friction reducing structure 350 of FIG. 8) configured to reduce a frictional force generated due to a movement of the gear connection structure. The friction reduction structure may include a first bearing (e.g., the first bearing 351 of FIG. 8) for reducing a frictional force between the first shaft and the bracket and surrounding at least a portion of the first shaft, a second bearing (e.g., the second bearing 352 of FIG. 8) for reducing a frictional force between the second shaft and the bracket, surrounding at least a portion of the second shaft and positioned between the gear and the bracket, and a third bearing (e.g., the third bearing 353 of FIG. 8) for reducing a frictional force between the second shaft and the bracket, surrounding at least a portion of the second shaft, and positioned between the third gear and the bracket.

According to various embodiments, the electronic device may further comprise a buffering member (e.g., the buffering member 360 of FIG. 11) for reducing a frictional force generated due to a sliding operation of the electronic device, positioned between the rack and the first housing.

According to various embodiments, the rack may include a support area (e.g., the support area 341 of FIG. 8) disposed on an inner surface of the second housing and a gear tooth (e.g., the gear tooth 343 of FIG. 8) extending from the support area and configured to be engaged with the third gear.

According to various embodiments, the electronic device may further comprise a circuit board (e.g., the circuit board 248 of FIG. 4) disposed in the first housing and a battery (e.g., the battery 249 of FIG. 4) disposed in the second housing. The first housing may include a frame (e.g., the frame 213 of FIG. 4) receiving the battery, a first cover member (e.g., the first cover member 211 of FIG. 4) surrounding at least a portion of the frame, and a first rear plate (e.g., the first rear plate 215 of FIG. 4) connected to the first cover member, and the second housing may include a second cover member (e.g., the second cover member 221 of FIG. 4) receiving a printed circuit board, and a second rear plate (e.g., the second rear plate 225 of FIG. 4) connected to the second cover member.

According to various embodiments, the electronic device may further comprise a guide rail (e.g., the guide rail 250 of FIG. 4) connected to the frame to guide a movement of the multi-bar structure.

According to various embodiments, the display may include a first display area (e.g., the first display area A1 of FIG. 4) connected to the second cover member and a second display area (e.g., the second display area A2 of FIG. 4) extending from the first display area and at least partially connected to the multi-bar structure.

According to various embodiments, the electronic device may further comprise a flexible printed circuit board (e.g., the flexible printed circuit board 242 of FIG. 4) electrically connecting the driving motor and the circuit board.

According to various embodiments, the driving motor, the first gear, the second gear, and the third gear may be positioned between a facing area (e.g., the facing area 210a of FIG. 6) of the first housing and the second housing and the display. The facing area may be substantially perpendicular to an inner surface of the first housing.

According to various embodiments of the disclosure, an electronic device (e.g., the electronic device 101 of FIG. 3) may comprise a housing (e.g., the housing 210 of FIG. 3) including a first housing (e.g., the first housing 201 of FIG. 3), a second housing (e.g., the second housing 202 of FIG. 3) at least partially surrounded by the first housing and configured to slide relative to the first housing, a display assembly (e.g., the display assembly 230 of FIG. 4) at least partially disposed on the second housing and configured to be rolled based on a movement of the housing, a driving motor (e.g., the driving motor 410 of FIG. 4) disposed in the housing and configured to generate a driving force, a gear structure (e.g., the gear structure 300 of FIG. 4) configured to move the second housing relative to the first housing using the driving force, a temperature sensor (e.g., the temperature sensor 410 of FIG. 13) disposed in the housing, and a processor (e.g., the processor 120 of FIG. 13) configured to change a rotational speed of the driving motor based on the temperature detected by the temperature sensor. The gear connection structure may include a first bevel gear (e.g., the first bevel gear 310 of FIG. 8) connected to the driving motor, a second bevel gear (e.g., the second bevel gear 320 of FIG. 8) configured to be engaged with the first bevel gear, a spur gear (e.g.,. the spur gear 330 of FIG. 8) connected to the second bevel gear and configured to rotate together with the second bevel gear, and a rack (e.g., the rack 340 of FIG. 8) disposed on an inner surface (e.g., the inner surface 202a of FIG. 8) of the second housing and configured to be engaged with the spur gear.

According to various embodiments, the processor may be configured to transfer, to the driving motor, a first signal for rotating the driving motor at a first rotational speed in a first designated temperature range and transfer, to the driving motor, a second signal for rotating the driving motor at a second rotational speed slower than the first rotational speed in a second designated temperature range lower than the first designated temperature range.

According to various embodiments, the electronic device may further comprise memory (e.g., the memory 130 of FIG. 13) configured to store rotational speed information about the driving motor corresponding to the temperature detected by the temperature sensor. The processor may be configured to change the rotational speed of the driving motor based on the rotational speed information stored in the memory.

According to various embodiments, the electronic device may further comprise a printed circuit board (e.g., the printed circuit board 248 of FIG. 4) disposed in the first housing and a battery (e.g., the battery 249 of FIG. 4) disposed in the second housing. The first housing may include a frame (e.g., the frame 213 of FIG. 4) receiving the battery, a first cover member (e.g., the first cover member 211 of FIG. 4) surrounding at least a portion of the frame, and a first rear plate (e.g., the first rear plate 215 of FIG. 4) connected to the first cover member, and the second housing may include a second cover member (e.g., the second cover member 221 of FIG. 4) receiving a printed circuit board, and a second rear plate (e.g., the second rear plate 225 of FIG. 4) connected to the second cover member.

According to various embodiments, an operating method of an electronic device may comprise obtaining a user input (e.g., operation 1010 of FIG. 14), rotating a driving motor based on the obtained user input, detecting a temperature of the electronic device (e.g., operation 1020 of FIG. 14), determining whether the detected temperature is less than or equal to a designated temperature (e.g., operation 1030 of FIG. 14), and reducing a rotational speed of the driving motor when the detected temperature is less than or equal to the designated temperature (e.g., operation 1041 of FIG. 14).

It is apparent to one of ordinary skill in the art that an electronic device including a gear structure according to the disclosure are not limited to the above-described embodiments and those shown in the drawings, and various changes, modifications, or alterations may be made thereto without departing from the scope of the present invention.

## Claims

1. An electronic device, comprising:
a first housing;
a second housing configured to slide with respect to the first housing;
a flexible display configured to be unfolded or rolled based on a sliding movement of the second housing;
a multi-bar structure supporting at least a portion of the flexible display;
a driving motor configured to generate a driving force for sliding the second housing, and disposed in the first housing; and
a gear connection structure for transferring the driving force to the second housing,
wherein the gear connection structure includes a first gear connected to the driving motor, a second gear configured to be engaged with the first gear, a third gear connected to the second gear and configured to rotate together with the second gear, and a rack disposed in the second housing and configured to be engaged with the third gear, and
wherein the first gear, the second gear, and the third gear are disposed in the first housing, and the rack is disposed in the second housing.

2. The electronic device of claim 1, further comprising:
a temperature sensor disposed in the first housing or the second housing; and
a processor configured to change a rotational speed of the driving motor based on a temperature detected by the temperature sensor.

3. The electronic device of claim 2, wherein the processor is configured to:
transfer, to the driving motor, a first signal for rotating the driving motor at a first rotational speed in a first designated temperature range; and
transfer, to the driving motor, a second signal for rotating the driving motor at a second rotational speed slower than the first rotational speed in a second designated temperature range lower than the first designated temperature range.

4. The electronic device of claim 2, further comprising memory configured to store rotational speed information about the driving motor corresponding to the temperature detected by the temperature sensor,
wherein the processor is configured to change the rotational speed of the driving motor based on the rotational speed information stored in the memory.

5. The electronic device of claim 1, wherein the first gear is configured to rotate about a first rotation axis, and
wherein the second gear and the third gear are configured to rotate about a second rotation axis substantially perpendicular to the first rotation axis.

6. The electronic device of claim 1, further comprising a bracket connecting at least a portion of the gear connection structure to the second housing and surrounding at least a portion of the first gear, the second gear, and the third gear.

7. The electronic device of claim 6, wherein the gear connection structure includes:
a first shaft connected to the first gear; and
a second shaft connected to the second gear and the third gear, and
wherein the first shaft and the second shaft are at least partially surrounded by the bracket.

8. The electronic device of claim 7, further comprising a friction reducing structure configured to reduce a frictional force generated by a movement of the gear connection structure, wherein the friction reducing structure includes:
a first bearing for reducing a frictional force between the first shaft and the bracket, the first bearing surrounding at least a portion of the first shaft;
a second bearing for reducing a frictional force between the second shaft and the bracket, the second bearing surrounding at least a portion of the second shaft, and positioned between the second gear and the bracket; and
a third bearing for reducing a frictional force between the second shaft and the bracket, the third bearing surrounding at least a portion of the second shaft and positioned between the third gear and the bracket.

9. The electronic device of claim 1, further comprising a buffering member for reducing a frictional force generated by a sliding operation of the electronic device, the buffering member positioned between the rack and the first housing.

10. The electronic device of claim 1, wherein the rack includes a support area disposed on an inner surface of the second housing and a gear tooth extending from the support area and configured to be engaged with the third gear.

11. The electronic device of claim 1, further comprising
a circuit board disposed in the first housing; and
a battery disposed in the second housing,
wherein the first housing includes a frame receiving the battery, a first cover member surrounding at least a portion of the frame, and a first rear plate connected to the first cover member, and
wherein the second housing includes a second cover member receiving the circuit board, and a second rear plate connected to the second cover member.

12. The electronic device of claim 11, further comprising a guide rail connected to the frame to guide a movement of the multi-bar structure.

13. The electronic device of claim 11, wherein the display includes a first display area connected to the second cover member and a second display area extending from the first display area and at least partially connected to the multi-bar structure.

14. The electronic device of claim 11, further comprising a flexible printed circuit board electrically connecting the driving motor and the circuit board.

15. The electronic device of claim 1, wherein the driving motor, the first gear, the second gear, and the third gear are positioned between a facing area of the first housing and the second housing and the display, and
wherein the facing area is substantially perpendicular to an inner surface of the first housing.
